Europäisches Patentamt

European Patent Office

Office européen des brevets

(11) Numéro de publication: **0 382 982**
**A1**

# (12) DEMANDE DE BREVET EUROPEEN

(21) Numéro de dépôt: 89400349.0

(22) Date de dépôt: 08.02.89

(51) Int. Cl.5: **B01D 53/32, B01D 53/14,
B01J 19/08**

(43) Date de publication de la demande:
**22.08.90 Bulletin 90/34**

(84) Etats contractants désignés:
**CH DE ES GB LI**

(71) Demandeur: **Belin, Christian**
**2 rue des Amorteaux**
**F-78730 Saint Arnoult en Yvelines(FR)**

(72) Inventeur: **Belin, Christian**
**2 rue des Amorteaux**
**F-78730 Saint Arnoult en Yvelines(FR)**

(74) Mandataire: **Tanguy, Gilbert André**
**SOCIETE INTERNATIONALE 19, rue de la Paix**
**75002 Paris(FR)**

(54) Procédé d'épuration de gaz et dispositif formant contacteur électrochimique gaz-liquide pour l'épuration des gaz.

(57) Epuration de gaz par combinaison d'une action physico-chimique entre ce gaz et un liquide choisi et d'une action électrolytique.

Selon un exemple de l'invention, le liquide qui est traversé à contre-courant par le gaz rencontre des étranglements (16) où se forment des engorgements et les électrodes (18) sont placées au voisinage de ces étranglements, lesdites électrodes étant raccordées à une source d'alimentation de tension.

Application à l'épuration de l'air.

FIG. 1

L'invention concerne un procédé d'épuration de gaz du type consistant à organiser un contact entre ledit gaz et un liquide, l'un et l'autre en mouvement, afin de mettre en oeuvre notamment les principes de solubilité entre le gaz à traiter et le liquide choisi en conséquence. L'invention consiste plus particulièrement à mettre en oeuvre, dans ce type de traitement, des actions de type électrolytiques. L'invention concerne aussi un dispositif formant contacteur électrochimique gaz-liquide pour l'épuration des gaz.

On connait des systèmes d'épuration de gaz dans lesquels le gaz à traiter et un liquide de composition chimique choisi en fonction des impuretés ou constituants du gaz que l'on désire éliminer ou transformer , sont mis en contact dans une enceinte comportant des particularités de structure propres à augmenter la "surface" de contact des phases liquide-gaz. A titre d'exemple, le brevet français n° 2 276 085 décrit un dispositif d'épuration, multicellulaire, traversé dans un sens par un liquide d'épuration et, généralement dans l'autre sens, par le gaz à traiter, l'agencement étant tel que de multiples zones rétrécies soient définies le long du trajet d'écoulement du liquide. Ces zones créent ainsi des engorgements ou l'écoulement du liquide devient particulièrement turbulent, assurant ainsi un excellent contact des phases liquide-gaz.

Ce dispositif d'épuration (ainsi que beaucoup d'autres qui seront envisagés plus loin) se prête à la mise en oeuvre du perfectionnement conforme à l'invention.

Par ailleurs, il est connu de mettre en oeuvre des réactions chimiques obtenues par voie électrolytique, dans le liquide d'épuration, en faisant passer un courant électrique entre deux électrodes immergées dans ce liquide. Ces réactions sont provoquées dans des cuves spéciales et le liquide est donc amené à circuler dans un circuit fermé établi entre un dispositif d'épuration décrit ci-dessus (où s'opèrent les transferts entre les masses liquide et gazeuse) et une telle cuve où sont mises en jeu des réactions d'oxydation ou de réduction, directes ou indirectes, avec éventuellement création de corps réactifs propres à "consommer" au moins une partie des masses transférées. Ces corps réactifs ont généralement une durée de vie relativement courte.

L'idée de base de l'invention consiste à mettre en oeuvre, en plus des phénomènes d'épuration proprement physicochimiques qui sont reconnus au dispositif décris plus haut, des phénomènes électrolytiques au sein-même des zones de contact des phases liquide-gaz, de façon à augmenter les capacités globales d'épuration de telles installations ainsi complétées.

Dans cet esprit, l'invention concerne donc généralement un procédé d'épuration de gaz du type consistant à mettre ledit gaz en contact avec un flux d'un liquide choisi, dans au moins une zone d'échange ou zone de transfert, caractérisé en ce qu'il consiste à mettre en oeuvre des phénomènes électrolytiques dans ladite zone d'échange.

L'invention concerne aussi un dispositif d'épuration de gaz du type comportant une structure où s'écoulent un liquide et un gaz, ladite structure définissant au moins une zone d'échange privilégié ou zone de transfert entre ledit liquide et ledit gaz, caractérisé en ce que des électrodes sont agencées dans ladite zone de transfert, et électriquement connectées pour être traversées par un courant électrique.

On peut attribuer les améliorations obtenues tant dans la qualité de l'épuration que dans la rapidité du traitement, notamment au fait que des corps réactifs à durée de vie très courte, peuvent désormais donner lieu à des réactions électrochimiques indirectes, participant à l'épuration parce que lesdits corps réactifs sont créés au sein même des zones de transfert entre le gaz et le liquide. Quoi qu'il en soit, avec ou sans formation de tels corps réactifs et selon les compositions chimiques du gaz et du liquide en présence, on constate en règle générale une augmentation de solubilité des masses transférées du gaz vers le liquide, par consommation directe de ces masses dans les zones d'échange, ainsi qu'une augmentation des vitesses de transfert dans lesdites zones d'échange. En outre, selon la nature des constituants du liquide et des électrodes, on peut mettre en oeuvre des réactions d'oxydo-réduction, choisies pour détruire les masses transférées directement dans les zones d'échange. De plus, la simple électrolyse du liquide d'épuration et notamment la formation de composés gazeux qui peut en résulter, modifient favorablement l'état physique du liquide et des couches limites des surfaces d'échange gaz-liquide. Ceci augmente les aires interfaciales d'échange, et diminue les résistances diffusionnelles.

Enfin, l'action électrolytique peut être ajustée par un choix approprié des paramètres électriques, afin de permettre ou au contraire empêcher certaines opérations d'oxydation et/ou de réduction. Ainsi, certaines réactions chimiques entre gaz et liquide, avantageuses pour le traitement, interdites thermodynamiquement ou inconnues jusqu' ici, peuvent désormais avoir lieu directement dans les zones d'échange ou zones de transfert.

La nature des électrodes dépend du traitement. Elles peuvent être en métal ou en fibres conductrices de matériaux composites, comme par exemple des fibres de carbone agglomérées par adjuvant. Selon les cas, on pourra prévoir un système d'électrolyse utilisant des électrodes positives et négatives d'un même élément chimique conducteur, typiquement un même métal. On pourra aussi faire appel, pour les électrodes positives et négatives à des éléments chimiques conducteurs différents, définissant entre eux un couple d'oxydoréduction choisi. De même certaines électrodes peuvent être revêtues d'un diaphragme ou d'une membrane "perm-sélective" et renfermées dans certains cas un électrolyte différent du liquide électrolytique de lavage entre ladite membrane et l'électrode.

Certaines électrodes constituées de tissus conducteurs (par exemple des fibres de carbone tressées) ou par des matériaux poreux imprégnés (de la céramique ou du plastique revêtus) peuvent jouer le rôle de structure de remplissage assurant les contacts gaz/liquide en même temps que leur rôle d'électrodes.

A titre d'exemple non limitatif, pour l'épuration de l'air chargé d'H2S, on pourra utiliser une structure telle que définie ci-dessus, et comportant des électrodes en titane. Le liquide d'épuration pourrait être de l'eau contenant du chlorure de sodium.

PLus généralement, l'invention permet de laver tout gaz contenant des impuretés gazeuses ou sous forme d'aérosol, notamment des produits organiques soufrés ou azotés et hydrocarbonés.

L'invention sera mieux comprise et d'autres avantages de celle-ci apparaîtront plus clairement à la lumière de la description qui va suivre de plusieurs modes de réalisation de dispositifs d'épuration de gaz conforme à son principe, donnée uniquement à titre d'exemple et faite en référence aux dessins annexés dans lequesl :

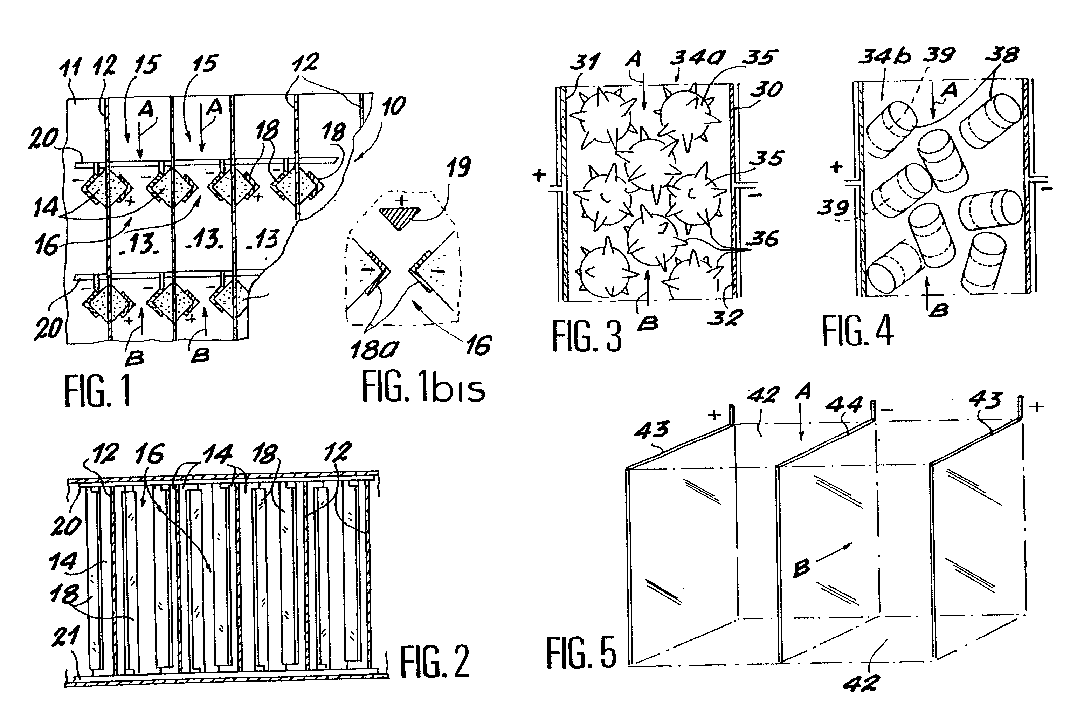

- Les figures 1 et 2 représentent schématiquement et partiellement une élévation en coupe et une vue de dessus d'un premier mode de réalisation d'un dispositif d'épuration fonctionnant par engorgement du liquide d'épuration ;

- la figure 1 bis est une vue de détail représentant une variante du mode de réalisation de la figure 1 ;

- Les figures 3 et 4 illustrent schématiquement d'autres modes de réalisation d'un dispositif d'épuration dans lesquels le liquide ruisselle sur des éléments propres à augmenter la surface d'échange liquide-gaz ; et

- La figure 5 représente schématiquement un autre mode de réalisation utilisant un matériau poreux.

En se reportant plus particulièrement aux figures 1 et 2, on a représenté une partie d'une structure d'épuration 10 agencée dans une enceinte 11 à l'intérieur de laquelle circulent d'une part, par gravité suivant le sens des flèches A, un liquide d'épuration et d'autre part, en étant forcé de bas en haut suivant le sens des flèches B et par des moyens de mise en circulation non représentés, le gaz à traiter. Selon l'exemple non limitatif, cette structure d'épuration se compose de cloisons parallèles 12, verticales, isolées et espacées les unes des autres, pour définir des couloirs 13, où le liquide et le gaz circulent à contre-courant. Les parois de ces cloisons sont munies de reliefs formés ici d'éléments 14 en forme de dièdres, allongés sur toute la largeur des couloirs 13 parallèles. L'agencement est tel que des éléments 14 portés par deux cloisons 12 adjacentes se font face deux à deux dans le couloir 13 qui sépare lesdites cloisons, de façon à définir des zones d'échange privilégié entre le gaz et le liquide, appelées zones de transfert 15. Ces dernières sont donc ici matérialisées au voisinage d'étranglement 16, chaque étranglement se situant entre deux éléments 14 opposés.

Selon une caractéristique importante de l'invention, chaque élément 14 est au moins métallisé au voisinage du sommet du dièdre, de façon à définir une électrode 18 correspondante. De multiples configurations sont possibles. Ainsi les éléments 14 peuvent être isolants et porter des plaques métalliques définissant ces électrodes. Ils peuvent aussi être réalisés entièrement dans le métal choisi, pour constituer l'électrode. Dans tous les cas, les électrodes 18 se trouvent ainsi placées à l'intérieur même des zones de tranfert 15. Ces électrodes sont électriquement connectées pour être reliées à au moins une source d'alimentation électrique (non représentée sur les dessins). Comme le montre la figure 2, des barres collectrices 20, 21, destinées à être reliées aux bornes de la source d'alimentation, sont disposées le long des parois de l'enceinte 11 et, selon leur polarité, les électrodes 18 sont connectées par l'une ou l'autre de leurs extrémités à l'une de ces barres collectrices. Ces dernières peuvent être recouvertes d'un isolant entre les électrodes auxquelles elles sont raccordées.

Le fonctionnement est simple et découle avec évidence de la description qui précède. Le débit de liquide qui s'écoule de haut en bas est suffisant pour provoquer des engorgements au niveau de chaque étranglement 15 et la masse de liquide ainsi mise en turbulence est traversée par le gaz à épurer, tandis qu'un circuit électrique se trouve établi au travers de chaque engorgement entre les électrodes qui y sont plongées. Comme mentionné précédemment, les électrodes peuvent être toutes du même matériau conducteur et notamment du même métal choisi en fonction du liquide et du gaz en présence ou bien les électrodes négatives et positives peuvent respectivement être réalisées dans des matériaux conducteurs différents, typiquement des métaux différents, définissant un certain potentiel d'oxydo-réduction. Dans l'exemple représenté, les électrodes d'un même signe sont toutes connectées en parallèle mais il est possible d'intercaler dans la structure des électrodes non directement connectées aux barres collectrices 20, 21. Ces électrodes "flottantes" forment avec les autres un groupement série-parallèle, la tension globale se répartissant entre les électrodes montées en série.

Selon le mode de réalisation de la figure 1 bis, on voit que les électrodes 18a définies aux étranglements 16 peuvent être de même polarité, les électrodes de l'autre polarité étant matérialisées par des inserts 19 placés dans les zones de transfert même, de préférence légèrement au-dessus des étranglements.

Les figures 3 et 4 montrent d'autres types d'agencement notablement différents de celui des figures 1 et 2, mais mettant néanmoins en oeuvre le principe de l'invention. Selon ces modes de réalisation, la structure d'échange où s'écoulent le liquide et le gaz comporte essentiellement un conteneur 30 dont deux parois opposées sont par exemple, métallisées intérieurement pour définir deux électrodes 31, 32 destinées à être respectivement connectées aux bornes de la source d'alimentation électrique. Dans ces deux modes de réalisation, l'une des électrodes 31 ou 32 peut être remplacée par une électrode centrale plongée dans le conteneur. Ce conteneur est rempli d'éléments 34 comportant chacun une surface conductrice, par exemple métallique, et au moins une partie isolante conformée pour protéger ladite surface métallique d'un contact direct avec toute surface métallique d'un autre élément 34, voisin. Comme précédemment, le liquide s'écoule par gravité, globalement suivant le sens de la flèche A, en ruisselant sur les éléments 34 tandis que le gaz est forcé à circuler à contre-courant suivant le sens de la flèche B. Dans certaines applications cependant, la circulation des gaz et des liquides peut se faire dans le même sens. Ainsi, il n'existe plus une pluralité de zones de transfert indiviudalisées au niveau d'étranglement, mais une seule zone de transfert aux dimensions du conteneur lui-même, plus précisément localisé entre les électrodes 31 et 32.

Selon l'exemple de réalisation de la figure 3, le conteneur 30 est rempli d'éléments 34a comportant chacun un noyau 35, par exemple sphérique, métallique ou métallisé en surface et des écarteurs isolants 36 faisant saillie de la surface externe de ce noyau.

Inversement, suivant l'exemple de réalisation de la figure 4, le conteneur 30 est rempli d'éléments 34b comportant chacun un tronçon creux 38, isolant et ouvert, par exemple un tronçon tubulaire, et dont la surface interne comporte au moins une partie métallique ou métallisée 39. Ainsi, dans les deux cas, les éléments 34a ou 34b se comportent comme des électrodes intermédiaires "flottantes" établissant globalement et de manière indéfinie une sorte de groupement série-parallèle d'électrodes entre les deux électrodes 31, 32 matérialisées le long des parois du conteneur. On peut mettre en jeu les mêmes phénomènes que dans le cas des figures 1 et 2. Les éléments 34 peuvent comporter des parties métalliques d'un même métal ou de deux métaux différents.

Enfin, le dispositif représenté à la figure 5 met en jeu des électrodes 43, 44, parallèles et alternées, disposées à l'intérieur d'un conteneur. Ces électrodes, ici réalisées par des plaques métalliques parallèles sont accolées à des blocs de matériau poreux 42, par exemple en matériau mousse, dans lequel le liquide s'écoule suivant le sens de la flèche A en s'infiltrant et ruisselant dans la masse dudit matériau mousse. Le gaz à traiter est quant à lui forcé au travers des blocs de matériau poreux 42 suivant le sens de la flèche B, c'est-à-dire ici perpendiculairement à l'écoulement du liquide.

Le mode de réalisation précédent peut aussi être constitué à partir d'électrodes de mousse métallique ou de tissus de fibres conductrices, ces électrodes ayant ou non , selon les applications, des diaphragmes ou des membranes "perm-sélectives" pouvant parfois renfermer un deuxième électrolyte.

Dans ce dernier cas, deux électrodes peuvent être séparées par une membrane recevant de part et d'autre un matériau alvéolaire. Le gaz circule soit dans l'un des compartiments alvéolaires et parfois dans les deux, les compartiments de matériaux alvéolaires étant alors alimentés par deux liquides électrolytiques conducteurs différents.

D'autres variantes sont envisageables, par exemple les électrodes peuvent être agencées sous forme de spires et des moyens d'induction magnétiques placés à l'extérieur de la zone d'échange peuvent induire le courant électrique nécessaire dans ces électrodes.

## Revendications

1. Procédé d'épuration de gaz du type consistant à mettre ledit gaz en contact avec un flux d'un liquide choisi, dans au moins une zone d'échange ou zone de transfert gaz-liquide (15), caractérisé en ce qu'il consiste d'une part à assurer une grande surface d'échange gaz-liquide dans ladite zone de transfert et, d'autre part à mettre en oeuvre des phénomènes électrolytiques (18) dans cette zone de transfert.

2. Dispositif d'épuration de gaz du type comportant une structure (10) où s'écoulent un liquide et un gaz, définissant au moins une zone d'échange privilégié ou zone de transfert (15) entre ledit liquide et ledit gaz, caractérisé en ce que ladite structure (10) est agencée pour assurer une grande surface d'échange gaz-liquide et en ce que des électrodes (18) sont installées dans ladite zone de transfert et électriquement connectées (20,21) pour permettre le passage d'un courant électrique.

3. Dispositif selon la revendication 2, caractérisé en ce que lesdites électrodes (20, 21) sont connectées pour être reliées à au moins une source d'alimentation électrique.

4. Dispositif selon la revendication 3, caractérisé en ce que des zones de transfert (15) sont définies au voisinage d'étranglements (16) matérialisés dans ladite structure et en ce que des électrodes précitées sont placées dans ces étranglements ou au-dessus.

5. Dispositif selon la revendication 4, caractérisé en ce que lesdits étranglements (16) sont définis par des reliefs (14) faisant saillie entre deux parois parallèles et en ce que ces reliefs constituent ou sont recouverts d'électrodes (18) précitées.

6. Dispositif selon la revendication 3, caractérisé en ce que la structure (10) précitée où s'écoulent le liquide et le gaz, est constituée par un conteneur (30) à l'intérieur duquel sont confinés des éléments (34A, 34B) comportant chacun une surface conductrice (35, 39) et au moins une partie isolante (36, 38) conformée pour protéger ladite surface conductrice d'un contact direct avec une surface conductrice d'un élément voisin, et en ce que deux électrodes collectrices (31, 32) destinées à être reliées à ladite source d'alimentation électrique sont placées dans ledit conteneur, ledit liquide s'écoulant entre lesdits éléments.

7. Dispositif selon la revendication 6, caractérisé en ce qu'un élément (34a) précité comporte un noyau (35) par exemple sphérique, métallique ou métallisé en surface, et des écarteurs isolants (36) faisant saillie de la surface externe de ce noyau.

8. Dispositif selon la revendication 6, caractérisé en ce qu'un élément (34b) précité comporte un tronçon creux (38) isolant, ouvert, par exemple un tronçon tubulaire dont la surface interne comporte au moins une partie métallique ou métallisée (39).

9. Dispositif selon la revendication 3, caractérisé en ce qu'il comporte des blocs de matériau poreux (42), par exemple un matériau mousse, dans lesquels le liquide s'écoule et en ce que ces blocs sont accolés les uns aux autres, avec interposition entre eux d'éléments conducteurs, par exemple des plaques métalliques parallèles, définissant lesdites électrodes 43, 44.

10. Dispositif selon l'une des revendications 2, 3, 4 ou 6, caractérisé en ce qu'il comporte des blocs de matériaux poreux métallisés dans lesquels le liquide s'écoule et en ce que ces blocs sont accolés les uns aux autres avec interposition d'éléments isolants.

11. Dispositif selon l'une des revendications 2, 3, 4 ou 6, caractérisé en ce qu'il comporte des blocs de matériaux poreux conducteurs dans lesquels le liquide s'écoule et en ce que ces blocs sont accolés les uns aux autres avec interposition de membranes, diaphragms ou membranes "permsélectives", les liquides de lavage étant éventuellement différents.

12. Dispositif selon l'une des revendications 2 à 9, caractérisé en ce que les électrodes sont toutes du même matériau conducteur.

13. Dispositif selon l'une des revendications 2 à 9, caractérisé en ce que lesdites électrodes sont d'au moins deux matériaux conducteurs différents, définissant entre eux un couple d'oxydo-réduction choisi.

14. Dispositif selon la revendication 12 ou 13, caractérisé en ce que les électrodes des zones de transfert sont séparées par des membranes formant diaphragmes.

15. Dispositif selon la revendication 14, caractérisé en ce que lesdites membranes sont "permsélectives".

FIG. 1

FIG. 1bis

FIG. 2

FIG. 3

FIG. 4

FIG. 5

EP 0 382 982 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 901 577 (DECHEMA) * Revendications 1,7-9; examples 1,2,4-6; figures 1,2,5-10 * | 1-3,10-15 | B 01 D 53/32 B 01 D 53/14 B 01 J 19/08 |
| X | FR-A-2 333 558 (OVAL ENGINEERING) * Revendication 1; figure 1 * | 1-3 | |
| A | FR-A- 835 288 (STANDARD OIL) * Page 2, lignes 53-76; figure 1 * | 1-3 | |
| A | FR-A-2 581 565 (SHIMRYO CORP.) * Figures 8-14 * | 1-10 | |
| A | GB-A-1 340 195 (O. NIGOL) | 1-10 | |

DOMAINES TECHNIQUES RECHERCHES (Int. Cl.5)

B 01 D
B 01 J
B 03 C

Le présent rapport a été établi pour toutes les revendications

| Lieu de la recherche | Date d'achèvement de la recherche | Examinateur |
|---|---|---|
| LA HAYE | 15-09-1989 | KANOLDT W.W. |